# EUROPEAN PATENT APPLICATION

(11) **EP 4 417 677 A1**
(43) Date of publication of application: **21.08.2024**
(21) Application number: 24158116.4
(22) Date of filing: 16.02.2024
(51) Int. Cl.: C11D 1/66, C11D 3/43

(54) **CHEMICAL COMPOSITION FOR REMOVING BUG SPLATTER FROM VEHICLE WINDSHIELDS**

(30) Priority: 17.02.2023 US 202363446753 P; 09.02.2024 US 202418437555
(71) Applicant: Illinois Tool Works Inc., Glenview IL 60025 (US)
(72) Inventor: YANG, Guozhen, Glenview, 60025 (US)
(74) Representative: HGF

(57) **Abstract**

A chemical composition for removing bug splatter from a glass substrate is provided that includes a surfactant present in an amount of 1 to 30 total weight percent of the composition.

A chaotropic agent present in an amount of 5 to 20 for inorganic salts and 15 to 40 for organic chemicals total weight percent of the composition. A solvent is present in which the surfactant and chaotropic agent are dissolved. A method cleaning bug splatter debris from a transparent substrate, such as a windshield, is also provided. The composition is applied to bug splatter debris and the transparent substrate to solubilize the bug splatter debris. The composition and the bug splatter debris are then wiped from the transparent substrate.

## Description

### RELATED APPLICATIONS

This application is a non-provisional application that claims priority benefit of US Provisional Application Serial Number 63/446,753 filed February 17, 2023; the contents of which are hereby incorporated by reference.

### FIELD OF THE INVENTION

The present invention in general relates to a chemical composition for removing bug splatter from glass, and in particular, to a gel composition that includes protein denaturants for enhanced bug splatter removal from a vehicle windshield by wiper blades.

### BACKGROUND OF THE INVENTION

Vehicles have a tendency to accumulate a variety of surface contaminants such as grime, brake dust, insect splatter, tar, tree sap, sticker adhesive and bird droppings. The severity of this tendency depends on the type of vehicle, season, driving habits, weather, traffic conditions, among various other factors. Insect splatter that accumulates on a vehicle windshield is of particular concern given that such contaminants obscure driver and passenger visibility. Furthermore, bug splatter is particularly difficult to clean off of the windshield given that bug splatter tends to contain a large amount of proteins and as a result, is not easily removed absent strong mechanical forces such as rubbing with a cloth and a cleaning composition, which is not possible when the vehicle is in motion.

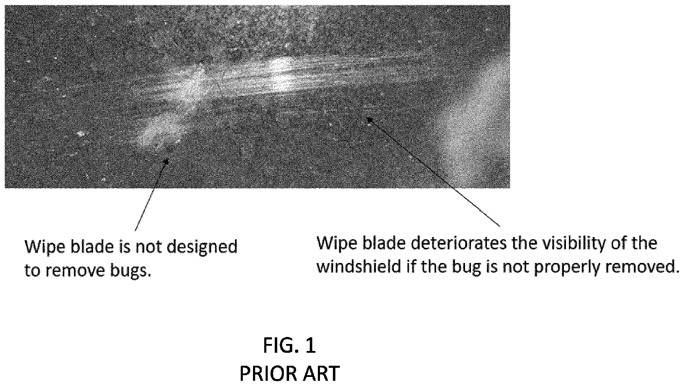

Removal of bug splatter from a vehicle windshield is further hampered given that typical windshield wiper blades are intended to wipe liquids away from the windshield and are not designed to remove solids such as bugs from a windshield. Instead, typical wiper blades tend to smear bug splatter across the windshield, as shown in FIG. 1, which further deteriorates the visibility through the windshield until the bug splatter can be properly removed using a cloth, cleaning composition, and vigorous mechanical forces. Furthermore, typical wiper blades offer significantly less friction than a cloth, so are not able to provide the vigorous mechanical forces required to remove bug splatter from a windshield.

While different chemical products are available on the market to help remove bug splatter from vehicles and windshields, these products have drawbacks. For example, existing windshield washer fluids are water based and not sufficient to remove bug splatter without smearing the contaminant on the window glass and often times washer fluid is not able to sufficiently and uniformly cover all of the area of the windshield, making some regions of typical windshields unable to be cleaned by wiper blades at all. Additionally, products such as bug and tar cleaners are designed for application to a windshield and subsequent rubbing with a cloth in order to obtain the forces necessary to properly remove bug splatter from the windshield. However, these products do not provide a solution for removing bug splatter from a vehicle windshield when the vehicle is moving, which is the time when visibility is more important. Additionally, such products often require a few minutes to soak on the contaminate after application before the contaminant can be properly scrubbed off of the windshield.

Thus, there exists a need for a chemical composition for easily and completely removing bug splatter from window glass, particularly a vehicle windshield, using the vehicle's windshield wiper blades.

### SUMMARY OF THE INVENTION

A chemical composition for removing bug splatter from a glass substrate is provided that includes a surfactant present in an amount of 1 to 30 total weight percent of the composition. A chaotropic agent present in an amount of 5 to 20 for inorganic salts and 15 to 40 for organic chemicals total weight percent of the composition. A solvent is present in which the surfactant and chaotropic agent are dissolved. A method cleaning bug splatter debris from a transparent substrate, such as a windshield, is also provided. The composition is applied to bug splatter debris and the transparent substrate to solubilize the bug splatter debris. The composition and the bug splatter debris are then wiped from the transparent substrate.

### BRIEF DESCRIPTION OF THE DRAWINGS

The subject matter that is regarded as the invention is particularly pointed out and distinctly claimed in the claims at the conclusion of the specification. The foregoing and other objects, features, and advantages of the invention are apparent from the following detailed description taken in conjunction with the accompanying drawings in which:
FIG. 1 shows a photograph of bug splatter on a windshield and the smear of that bug splatter after being wiped by a typical windshield wiper blade;
FIG. 2 shows a number of anionic and cationic chaotropic agents according to embodiments of the present invention;
FIG. 3 is a prior art schematic showing salt concentration versus solubility;
FIG. 4 shows how pH modifiers of the present invention affect solubility of protein in water.

### DETAILED DESCRIPTION OF THE INVENTION

The present invention has utility as a chemical composition for application to a vehicle windshield or vehicle windshield wipers to enable easy and complete removal of bug splatter from a vehicle windshield using the vehicle's windshield wiper blades. A method for use of such a composition to clean a windshield is also provided. Notably, the present invention does not require soaking of the bug splatter, extended dwell time, or vigorous wiping with any material other than the conventional operative of vehicle wiper blades or manual application.

Numerical ranges cited herein are intended to recite not only the end values of such ranges but the individual values encompassed within the range and varying in single units of the last significant figure. By way of example, a range of from 0.1 to 1.0 in arbitrary units according to the present invention also encompasses 0.2, 0.3, 0.4, 0.5, 0.6, 0.7, 0.8, and 0.9; each independently as lower and upper bounding values for the range.

It is appreciated that the present invention is applicable to variety of windshields and screens. These use environments illustratively include a passenger land vehicle, a motorcycle, a truck, watercraft, aircraft, and motorcycle helmet visors and goggles. It is note that suitable substrates those formed of transportation-grade glasses, acrylics, polycarbonates and surface coated versions of any of the aforementioned.

According to embodiments, the bug removal composition of the present invention includes an organic solvent, a surfactant, and a chaotropic agent are provided. In some inventive embodiments, further additives are provided that include a pH modifier, a non-chaotropic salt, a thixotrope, a gellant, a dye, a preservative, or a combination thereof. Advantageously, the chaotropic agents of the present invention are provided under use conditions so as denature the large amount of proteins present in bug splatter by unfolding the proteins therein to make them easily soluble in water and thereby enhance the cleaning performance of the inventive bug removal composition. The use conditions including formulation factors such as chaotropic agent identity, concentration, solution molality, solution pH, and chemical compatibility and application factors such as temperature, debris dimensions and identify, wiping conditions, and tool materials. According to embodiments, the chaotropic agents of the present invention include two categories, namely salt or an organic chemical.

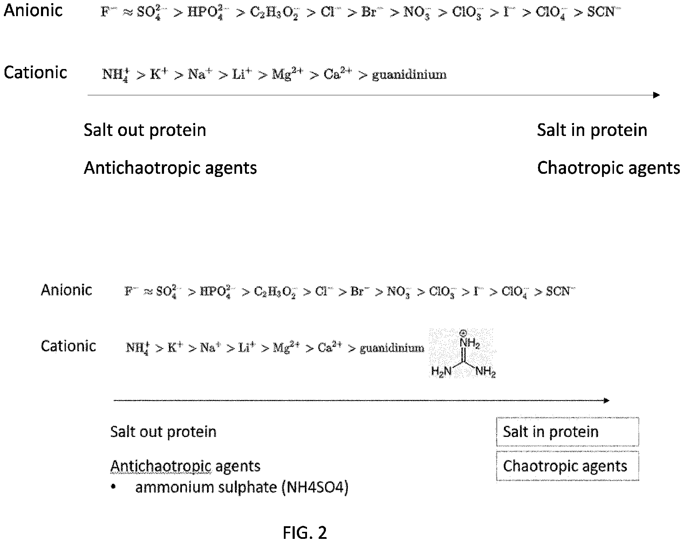

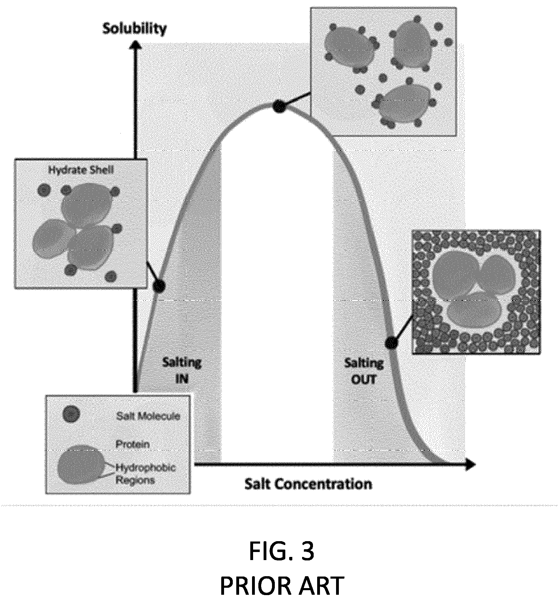

Salt follows the Hofmeister Series or Lyotropic Series. The Hofmeister series or lyotropic series is a classification of ions in order of their lyotrophic properties, which is the ability to salt out or salt in proteins. According to the present invention, anions in general tend to have a larger effect than cations, as shown in FIG. 2 in removing bug debris from a substrate. As a result, formulation of inventive compositions as to concentration is a factor of the identity of the specific chaotropic agent. As noted in FIG. 2, ammonium sulfate operates to increase hydrogen bonding and thus functions as an antichaotropic agent. An optimal concentration range is noted for a chaotropic. This is shown schematically in prior art FIG. 3. That is, "salting in" of target bug debris rich in protein is when at the agent is at a comparatively low concentration, added agent increases the solubility of charged molecules, while "salting out" occurs when the agent is at a high concentration, the addition of salt increases the solubility of charged molecules. In accordance with the Hofmeister series or lyotropic series, the salts that make up the chaotropic agent according to embodiments of the present invention illustratively include guanidine, multivalent cations, alkali metal cations, and organics. Specific chaotropic agents operative herein illustratively include guanidine thiocyanate, guanidine isothiocyanate, guanidinium chloride, magnesium chloride, lithium perchlorate, sodium iodide, potassium iodide, lithium acetate, formamide, sodium salicylate, thiourea, urea, ethanol, n-butanol, 2-propanol, arginine and combinations thereof. Salts are used in some inventive embodiments in a concentration of between 1 and 10 M. Organic chaotropic agents are used in some inventive embodiments in a concentration of between 5 and 9 M. Without intending to be bound to a particular theory, it is noted that an organic chaotropic agent also has the attribute of acting as a solvent to solubilize the lipophilic components of the bug splatter.

As noted above, embodiments of the inventive bug splatter remover composition include an organic solvent distinct from an organic chaotropic agent, a surfactant, a pH adjuster, or combination thereof in addition to the chaotropic agent previously described.

According to embodiments, the surfactant is either ionic or non-ionic. Non-ionic surfactants operative herein are soluble in water, alcohol, and biobased solvent systems detailed herein. According to embodiments, the surfactant is present in an amount of 1 to 15 total weight %. According to some inventive embodiments, the surfactant is alcohol ethoxylate, amidoamine oxide, or a combination thereof.

Non-ionic surfactants operative herein in some inventive embodiments have hydrophile/lipophile balance (HLB) values between 8 and 14. Classes of non-ionic surfactants operative herein include C₉-C₂₄ fatty acid esters, C₁₂-C₂₄ fatty alcohol ethers and C₁₀-C₂₄ amine oxides, nonylphenol ethoxylate, each alone or any of the aforementioned in combination. Other alcohol alkoxylates operative herein have the general formula: 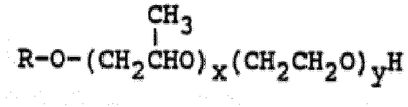 where R is C₄-C₂₂ linear or branched chain alkyl or mixtures thereof; x has a value of from 2 to 20; y has a value of from 0 to 15, or
the general formula:

**RO-(CH₂CH₂O)ₙ-H**

where n is average moles of ethylene oxide (EO) and R is a C₉-C₁₈ alkyl.

Specific non-ionic surfactants operative herein illustratively include lauramidopropylamine oxide, myristamidopropylamine oxide, a mixed lauramidopropylamine and myristamidopropylamine oxide, C₉-₁₁ ethoxylated alcohols having EO values from 2.5 - 9 or combinations thereof. In some inventive embodiments, EO 2.5 C₉-₁₁ ethoxylated alcohol is used in combination with one or more EO 6-9 C₉-₁₁ ethoxylated alcohols. The ratio of EO 2.5: EO 6-9 C₉-₁₁ ethoxylated alcohols being between 0.1-1:1. In still other embodiments, the mixing 2.5 EO and 6-9EO C₉-₁₁ ethoxylated alcohols are used in combination with a non-ionic amine oxide. Typical loadings of all non-ionic surfactants present in an inventive composition range from 1 to 15 total weight percent.

Ionic surfactants operative herein include sodium dodecyl sulfate. amine oxide, sodium olefin sulfonate, sodium laurate, sodium lauryl sarcosinate, sodium octyliminopropionate, tetrasodium ethylenediamine tetraacetate, and combinations thereof.

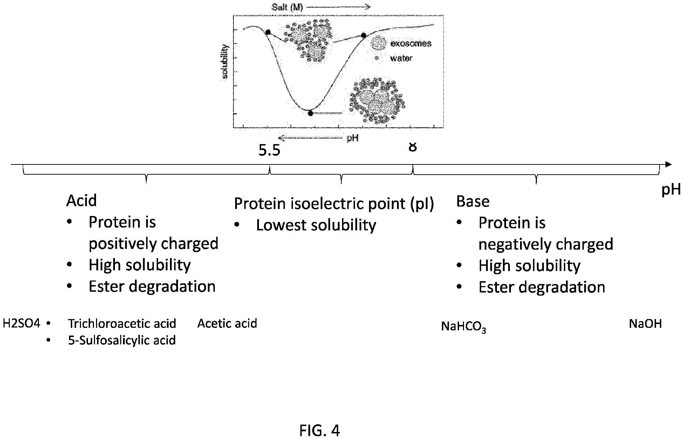

As shown in FIG. 4, both acidic pH modifiers and basic pH modifiers increase the solubility of protein in water. However, according to some embodiments, the pH modifier is a base. For example, according to embodiments of the present invention, the pH modifier is NaHCO₃ or NaOH. When such pH modifiers are utilized, the proteins are negatively charged, a high solubility results, ester degradation occurs. In some embodiments, a pH modifier is present in an amount to achieve a composition pH of between 8 and 12. According to embodiments the pH modifier is present in an amount of 0 to 5 total weight percent.

According to embodiments, the bug removal composition of the present invention additionally includes a gel-forming thixotrope to increase the viscosity of the composition at low shear rates. Such embodiments are then easily applied to vehicle windshield wipers to give the wipers the unique ability to remove bug splatter from vehicle windshields without further modification to the windshield or the windshield wipers. Gel-forming thixotropes operative herein include a combination of: (a) an inorganic gel forming substance from the classes of phyllosilicate, either natural smectite clay or synthetic layered silicate , or combination thereof; with (b) at least one water soluble polymer of: an alkali soluble emulsion polymer, a Hydrophobically modified alkali-soluble emulsion polymer, butyl acrylate-methacrylic acid-methyl methacrylate copolymer, hydrophobically modified non-ionic polyol, cellulose ethers, natural gums or combination thereof. The ratio of inorganic gel forming substance: hydrophilic polymer is between 0.1 - 1:1. Typical loadings of gel forming components in an inventive composition range from 0.2 to 3 total weight percent. Phyllosilicates operative herein for a gel in the inventive composition and illustratively include KMg₂AlSi₄O₁₂; Al₃Si₄N₂O₁₀; K₁₋ₓ CaₓMg₂Al₁₊ₓSi₄₋ₓO₁₂, where 0.10≦x≦0.40; NaAl₃Si₂Al₂O₁₂; KAl₃Si₂Al₂O₁₂; CaMg₃Si₄O₁₂;, BaMg₃Si₄O₁₂; SrMg₃Si₄O₁₂; KTiAlSi₄O₁₂; and combinations thereof. According to embodiments, the thixotrope is present in an amount of 0 to 5 total weight %. According to embodiments, the thixotrope is OPTIGEL-WX^{®} or CARBOPOL AQUA^{®} 30.

An inventive composition is readily applied to a vehicle window substrate by swabbing, pump spray, or by application from a window washer spray nozzle. The vehicle wiper blades then wipe the composition on the windshield to remove the bug splatter. Alternatively, an inventive composition is applied to the blade of a windshield wiper, preferably as a gel, to enhance the blade's ability to remove bug splatter when the wipers are used in their normal operation on the vehicle windshield.

The formulary of an inventive composition is summarized below in Table 1.

| Ingredient Type | | Weight % |
|---|---|---|
| Chaotropic agent | | 5 to 20 for salts and 15-40 for organic chemicals |
| | • Salt | |
| | • Organic | |
| Surfactant | | 1 to 15 |
| Gelling thixotrope | | 0 to 5 |
| pH modifier | | 0 to 2 |
| Ionic strength increasing salt | | 0 to 2 |
| | | |
| Dye or Pigment | | 0 to 10 |
| Preservative | | 0 to 0.1 |
| Solvent | | to 100% |

Specific exemplary formulations of an inventive composition are provided, unless noted otherwise, all percentages for the specific formulation are total weight percentages.

**Inventive composition 1.**

| Ingredient Type | Ingredient Specific | Weight % |
|---|---|---|
| Surfactant | alcohol ethoxylate | 5 |
| Surfactant | amidoamine oxide | 5 |
| Gelling thixotrope | clay-based rheology additive | 2 |
| pH modifier | NaOH | 0.4 |
| chaotropic agent | guanidine thiocyanate | 10.5 |
| Solvent | water | to 100% |

**Inventive composition 2.**

| Ingredient Type | Ingredient Specific | Weight % |
|---|---|---|
| Surfactant | alcohol ethoxylate | 5 |
| Surfactant | amidoamine oxid | 5 |
| Gelling thixotrope | clay-based rheology additive | 2 |
| pH modifier | naoh | 0.4 |
| Chaotropic agent | urea | 25 |
| Solvent | water | to 100% |

The advantages of this invention are more particularly shown by the following example in which the parts and percentages are by weight unless otherwise indicated.

### Examples

A mixture of egg and rice is applied on glass slides to simulate bug residue on a windshield for formula screening. Various formulations as indicated below are applied to the glass slides and cleaned by paper towel and by squeegee. The results are reported below in the following tables.

### Example 1- Guanidine Thiocyanate in water

| Concentration | 0.1 mol/L | 1 mol/L | 2 mol/L |
|---|---|---|---|
| Cleaning by paper towel | Good | Good | Limited |
| Cleaning by squeegee | Good | Good | Limited |

### Example 2- Urea in water

| Concentration | 5 mol/L | 7.5 mol/L |
|---|---|---|
| Cleaning by paper towel | Good | Good |
| Cleaning by squeegee | Good | Good |

### Example 3- NaOH in water

| Concentration | 1 mol/L |
|---|---|
| Cleaning by paper towel | Limited |
| Cleaning by squeegee | Good |

### Example 4- H₂SO₄ in water

| Concentration | 95-98% |
|---|---|
| Cleaning by paper towel | Poor |

### Example 5- Other chemicals

| Chemical | Alcohol ethoxylate | Amidoamine oxide | Butyl Carbitol | Novethix L-10 |
|---|---|---|---|---|
| Cleaning with water | Good | Good | Poor | Poor |
| Cleaning without water | Poor | Poor | Poor | Poor |

Patent documents and publications mentioned in the specification are indicative of the levels of those skilled in the art to which the invention pertains. These documents and publications are incorporated herein by reference to the same extent as if each individual document or publication was specifically and individually incorporated herein by reference.

The foregoing description is illustrative of particular embodiments of the invention but is not meant to be a limitation upon the practice thereof. The following claims, including all equivalents thereof are intended to define the scope of the invention. Certain embodiments of the invention are described in the following clauses:
Claus 1. A chemical composition for removing bug splatter from a glass substrate, the composition comprising:
   a surfactant present in an amount of 1 to 30 total weight percent of the composition;
   a chaotropic agent present in an amount of 5 to 20 for inorganic salts and 15 to 40 for organic chemicals as a total weight percent of the composition; and
   solvent in which the surfactant and the chaotropic agent are dissolved.
Clause 2. The composition of clause 1 wherein the surfactant is non-ionic or ionic.
Clause 3. The composition of clause 1 wherein the surfactant is present in an amount of 10 total weight percent of the composition.
Clause 4. The composition of clause 1 wherein the surfactant is alcohol ethoxylate, amidoamine oxide, or a combination thereof.
Clause 5. The composition of clause 1 further comprising a pH modifier.
Clause 6. The composition of clause 5 wherein the pH modifier is NaHCO₃ or NaOH.
Clause 7. The composition of clause 5 wherein the pH modifier is present in an amount to achieve a composition pH of between 8.0 and 12.0.
Clause 8. The composition of clause 5 wherein the pH modifier is present in an amount of 0 to 5 total weight percent of the composition.
Clause 9. The composition of clause 1 wherein the chaotropic agent is a salt.
Clause 10. The composition of clause 9 wherein the salt is at least one of guanidine thiocyanate, guanidine isocyanate, guanidinium chloride magnesium chloride, lithium perchlorate, sodium iodide, potassium iodide, lithium acetate, formamide, sodium salicylate, or combinations thereof.
Clause 11. The composition of clause 1 wherein the organic chemical of the chaotropic agent is an organic molecule of at least one of guanidine thiocyanate, guanidine isothiocyanate, guanidinium chloride, lithium acetate, formamide, sodium salicylate, thiourea, urea, ethanol, n-butanol, 2-propanol, arginine and combinations thereof.
Clause 12. The composition of clause 1 wherein the solvent is water.
Clause 13. The composition of clause 1 wherein the composition further comprises a thixotrope configured to increase viscosity of the composition.
Clause 14. The composition of clause 13 wherein the thixotrope is present in an amount of 0 to 5 total weight percent of the composition.
Clause 15. The composition of clause 13 wherein the thixotrope is phyllosilicate, either natural smectite clay or synthetic layered silicate, an alkali soluble emulsion polymer, a hydrophobically modified alkali-soluble emulsion polymer, butyl acrylate-methacrylic acid-methyl methacrylate copolymer, hydrophobically modified non-ionic polyol, cellulose ethers, natural gums, or combination thereof
Clause 16. The composition of clause 1 wherein the composition further comprises a gellant, a dye, a preservative or a combination thereof.
Clause 17. A method cleaning bug splatter debris from a transparent substrate comprising:
   applying a composition of clause 1 to the bug splatter debris and the transparent substrate to solubilize the bug splatter debris; and
   wiping the composition and the bug splatter debris from the transparent substrate.
Clause 18. The method of clause 17 further comprising combining the composition with a windshield washer fluid to form a solution and applying the solution to the transparent substrate.
Clause 19. The method of clause 17 wherein the transparent substrate is on a passenger land vehicle, a motorcycle, a truck, watercraft, or aircraft.
Clause 20. The method of clause 17 wherein the wiping is with a mechanical wiper.

## Claims

1. A chemical composition for removing bug splatter from a glass substrate, the composition comprising:
a surfactant present in an amount of 1 to 30 total weight percent of the composition;
a chaotropic agent present in an amount of 5 to 20 for inorganic salts and 15 to 40 for organic chemicals as a total weight percent of the composition; and
solvent in which the surfactant and the chaotropic agent are dissolved.

2. The composition of claim 1 wherein the surfactant is non-ionic or ionic.

3. The composition of claim 1 wherein the surfactant is present in an amount of 10 total weight percent of the composition, or wherein the surfactant is alcohol ethoxylate, amidoamine oxide, or a combination thereof.

4. The composition of claim 1 further comprising a pH modifier, and optionally wherein the pH modifier is NaHCO₃ or NaOH.

5. The composition of claim 4 wherein the pH modifier is present in an amount to achieve a composition pH of between 8.0 and 12.0, or wherein the pH modifier is present in an amount of 0 to 5 total weight percent of the composition.

6. The composition of claim 1 wherein the chaotropic agent is a salt, and optionally wherein the salt is at least one of guanidine thiocyanate, guanidine isocyanate, guanidinium chloride magnesium chloride, lithium perchlorate, sodium iodide, potassium iodide, lithium acetate, formamide, sodium salicylate, or combinations thereof.

7. The composition of claim 1 wherein the organic chemical of the chaotropic agent is an organic molecule of at least one of guanidine thiocyanate, guanidine isothiocyanate, guanidinium chloride, lithium acetate, formamide, sodium salicylate, thiourea, urea, ethanol, n-butanol, 2-propanol, arginine and combinations thereof

8. The composition of claim 1 wherein the solvent is water.

9. The composition of claim 1 wherein the composition further comprises a thixotrope configured to increase viscosity of the composition.

10. The composition of claim 9 wherein the thixotrope is present in an amount of 0 to 5 total weight percent of the composition or
the composition of claim 13 wherein the thixotrope is phyllosilicate, either natural smectite clay or synthetic layered silicate, an alkali soluble emulsion polymer, a hydrophobically modified alkali-soluble emulsion polymer, butyl acrylate-methacrylic acid-methyl methacrylate copolymer, hydrophobically modified non-ionic polyol, cellulose ethers, natural gums, or combination thereof

11. The composition of claim 1 wherein the composition further comprises a gellant, a dye, a preservative or a combination thereof.

12. A method cleaning bug splatter debris from a transparent substrate comprising:
applying a composition of claim 1 to the bug splatter debris and the transparent substrate to solubilize the bug splatter debris; and
wiping the composition and the bug splatter debris from the transparent substrate.

13. The method of claim 12 further comprising combining the composition with a windshield washer fluid to form a solution and applying the solution to the transparent substrate.

14. The method of claim 12 wherein the transparent substrate is on a passenger land vehicle, a motorcycle, a truck, watercraft, or aircraft.

15. The method of claim 12 wherein the wiping is with a mechanical wiper.
